# FASCICULE DE BREVET EUROPEEN

(11) **EP 1 246 687 B1**
(45) Date de publication et mention de la délivrance du brevet: **25.02.2004**
(21) Numéro de dépôt: 00984988.6
(22) Date de dépôt: 08.11.2000
(51) Int. Cl.: B01D 61/50, B01D 61/52

(54) **CAISSON D'EXTREMITE POUR UN ELECTRODIALYSEUR, ELECTRODIALYSEUR COMPRENANT UN TEL CAISSON D'EXTREMITE ET PROCEDE D'ELECTRODIALYSE**
ENDKASTEN FÜR EINEN ELEKTRODIALYSATOR UND ELEKTRO-DIALYSE-VERFAHREN
END BOX FOR AN ELECTRODIALYSER, ELECTRODIALYSER COMPRISING SAME AND ELECTRODIALYSIS METHOD

(30) Priorité: 11.11.1999 IT MI992358
(43) Date de publication de la demande: 09.10.2002
(73) Titulaire: SOLVAY (Société Anonyme), 1050 Bruxelles (BE)
(72) Inventeur: BOTTE, Luc, I-57013 Rosignano-Solvay (IT)
(74) Mandataire: Jacques, Philippe
(86) Numéro de dépôt international: PCT/EP2000/011036
(87) Numéro de publication internationale: WO 2001/034282

(56) Documents cités:
- EP-A- 0 186 008
- EP-A- 0 340 820
- EP-A- 0 724 904

## Description

L'invention concerne les électrodialyseurs.

Elle est plus particulièrement relative aux caissons qui sont disposés aux extrémités des électrodialyseurs et comportent des électrodes.

Les électrodialyseurs sont des installations électrochimiques, formées d'un empilage de membranes sélectivement perméables aux ions et de cadres séparateurs entre deux caissons d'extrémités contenant des électrodes. Les caissons d'extrémités comprennent normalement une enceinte et, dans celle-ci, une électrode verticale et une membrane sélectivement perméable aux ions, disposée verticalement, en regard de l'électrode. La représentation schématique d'un électrodialyseur figure dans Techniques de l'ingénieur 3-1988, page J2840 - 13, Fig. 18. Pendant l'exploitation de l'électrodialyseur, les électrodes sont raccordées aux bornes d'une source de courant continu et des électrolytes sont introduits dans les compartiments définis entre les membranes, ainsi que dans les deux caissons d'extrémités, de manière à engendrer des réactions électrochimiques au sein des électrolytes.

Les réactions électrochimiques qui se produisent dans les caissons d'extrémités engendrent généralement un gaz sur les électrodes, par exemple de l'oxygène et de l'hydrogène dans le cas d'électrolytes aqueux. Il est important d'assurer une évacuation régulière de ces gaz, ce qui est habituellement obtenu en faisant circuler l'électrolyte en boucle entre le caisson d'extrémité et une chambre de dégazage (EP-A-0081092, page 8, lignes 11 à 16). On a également proposé d'utiliser des tôles métalliques ajourées pour les électrodes, et de ménager une chambre derrière la tôle, pour la circulation de l'électrolyte et du gaz [EP-A-0724904 (SOLVAY)].

Pendant le fonctionnement des électrodialyseurs, on observe habituellement que la densité du courant électrique se répartit de manière hétérogène dans les membranes, de telle sorte qu'elle est plus élevée dans la partie inférieure des membranes et va en décroissant du bas vers le haut de celles-ci. Ce phénomène concerne surtout les membranes qui sont les plus proches des caissons d'extrémités, spécialement la membrane qui est contiguë à celle d'un caisson d'extrémité. Il perturbe le fonctionnement des électrodialyseurs.

L'invention vise à remédier à cet inconvénient des électrodialyseurs connus, en fournissant un caisson d'extrémité de conception nouvelle, qui, toutes autres choses étant égales par ailleurs, améliore grandement l'homogénéité de la densité du courant électrique dans les électrodialyseurs.

En conséquence, l'invention concerne un caisson d'extrémité pour un électrodialyseur, comprenant une électrode verticale et une membrane sélectivement perméable aux ions, disposée verticalement, vis-à-vis de l'électrode, le caisson se caractérisant par la présence d'un couloir vertical, qui sépare l'électrode de la membrane.

L'électrode du caisson selon l'invention doit être en une matière conductrice de l'électricité et compatible avec la réaction d'électrode recherchée. Sa structure n'est pas critique. Elle comprend avantageusement une tôle métallique. La tôle métallique peut par exemple comprendre une tôle pleine, une tôle ajourée, une feuille en métal déployé, une plaque à claire-voie ou un treillis. L'électrode est sensiblement verticale.

On entend désigner par membrane sélectivement perméable aux ions, une feuille mince, sensiblement imperméable aux électrolytes aqueux, mais perméable à certains ions. La membrane sélectivement perméable aux ions peut être une membrane sélectivement perméable aux anions ou une membrane sélectivement perméable aux cations.

Dans le caisson selon l'invention, l'électrode et la membrane sont normalement disposées dans une enceinte, délimitée par un châssis approprié dont la forme et la structure ne sont pas critiques pour l'invention. Des informations concernant le châssis sont notamment accessibles dans Techniques de l'ingénieur 3-1988, page J2840 - 13, Fig. 18 et dans EP-A-0724904 (SOLVAY).

Conformément à l'invention, l'électrode et la membrane sont séparées par un couloir vertical. Le couloir s'étend sur la totalité de la hauteur de l'électrode et de la membrane et, avantageusement, sur sensiblement la totalité de la longueur de l'électrode et de la membrane. Le couloir est destiné à permettre une circulation ascendante de l'électrolyte et du gaz généré sur l'électrode pendant le fonctionnement normal de l'électrodialyseur. La largeur du couloir (sa dimension transversalement à la membrane et à l'électrode) doit être suffisante pour que la circulation précitée de l'électrolyte et du gaz se fasse sensiblement sans entrave. La largeur optimale dépend de divers paramètres, notamment des dimensions de l'électrode (principalement sa hauteur), de la densité du courant électrique et de l'électrolyte utilisé dans le caisson. Elle doit dès lors être déterminée dans chaque cas particulier par un travail de routine au laboratoire. En pratique, lorsque l'électrode est une tôle, on recommande que la largeur du couloir soit supérieure à 0,002 fois la hauteur de la tôle, le rapport entre la largeur du couloir et la hauteur de la tôle étant de préférence compris entre 1:200 et 1:50.

Dans le caisson selon l'invention, tout moyen approprié peut être utilisé pour former le couloir. Selon une forme de réalisation préférée de l'invention, le couloir est délimité entre l'électrode et une plaque verticale ajourée, qui supporte la membrane et qui est maintenue écartée de l'électrode par des entretoises. Dans cette forme de réalisation de l'invention, les entretoises doivent être conçues en sorte de ne pas faire obstacle à la circulation ascendante de l'électrolyte et du gaz dans le couloir, pendant l'exploitation du caisson. A cet effet, elles peuvent par exemple comprendre des lamelles verticales, qui sont fixées par leurs tranches à l'électrode et à la plaque.

Dans la forme de réalisation de l'invention, qui vient d'être décrite, il convient d'éviter que la plaque soit le siège d'un dégagement de gaz pendant l'utilisation du caisson dans un électrodialyseur. Cet objectif est atteint par divers moyens. Selon un premier moyen, on réalise la plaque en une matière inerte, non conductrice de l'électricité. Selon un deuxième moyen, on réalise la plaque en une matière conductrice de l'électricité, dont la surtension au dégagement du gaz produit sur l'électrode, est supérieure à celle de l'électrode. Selon un troisième moyen, qui est préféré, la plaque est réalisée en une matière conductrice de l'électricité et l'intercalaire qui la relie à l'électrode est en une matière non conductrice de l'électricité.

L'invention concerne également un électrodialyseur, comprenant, de manière connue en soi, une alternance de membranes verticales, sélectivement perméables aux ions et de séparateurs, entre deux caissons d'extrémités dont l'un au moins est conforme à l'invention.

Dans l'électrodialyseur selon l'invention, les membranes sélectivement perméables aux ions, qui sont situées entre les deux caissons, peuvent comprendre des membranes sélectivement perméables aux anions, des membranes sélectivement perméables aux cations et des membranes bipolaires.

Dans l'électrodialyseur selon l'invention, les membranes sélectivement perméables aux ions et les séparateurs qui sont interposés entre elles, définissent des compartiments d'électrodialyse qui sont en communication avec des conduits d'admission et des conduits d'évacuation d'électrolytes. En pratique, pour former ces compartiments, les séparateurs sont des cadres appliqués sur la zone périphérique des membranes. Le nombre de compartiments d'électrodialyse n'est pas critique. Il est normalement supérieur à dix et peut habituellement s'élever à plusieurs centaines, entre les deux caissons d'extrémités.

L'électrodialyseur selon l'invention trouve diverses applications qui sont bien connues dans les techniques de l'électrodialyse. Il est spécialement adapté aux procédés d'électrolyse mettant en oeuvre, dans l'électrodialyseur, une densité de courant électrique qui est inférieure à 3 kA/m² et qui, de préférence, n'excède pas 2,5 kA/m².

L'invention est dès lors également relative à un procédé d'électrodialyse selon lequel on met en oeuvre un électrodialyseur conforme à l'invention, et on réalise dans ledit électrodialyseur une densité de courant électrique inférieure à 3 kA/m². Dans le procédé selon l'invention, on sélectionne de préférence une densité de courant qui n'excède pas 2,5 kA/m², les valeurs de 0,1 à 2,0 kA/m² étant spécialement avantageuses, celles de 0,5 à 1,5 kA/m² étant préférées.

Dans le procédé selon l'invention, la densité du courant électrique est exprimée par rapport à la superficie d'une face de la membrane du caisson d'extrémité de l'électrodialyseur. Dans le cas où les membranes des deux caissons d'extrémités n'ont pas la même superficie, la densité de courant est exprimée par rapport à la membrane qui a la plus petite superficie.

Le procédé selon l'invention trouve une utilisation spécialement avantageuse pour l'électrodialyse de solutions aqueuses de sels de sodium tels que du chlorure de sodium, du carbonate de sodium, du phosphate de sodium ou du sulfate de sodium. Il est spécialement adapté à la fabrication de solutions aqueuses d'hydroxyde de sodium par électrodialyse de solutions aqueuses de chlorure de sodium ou de carbonate de sodium.

Des particularités et détails de l'invention vont apparaître au cours de la description suivante des dessins annexés.

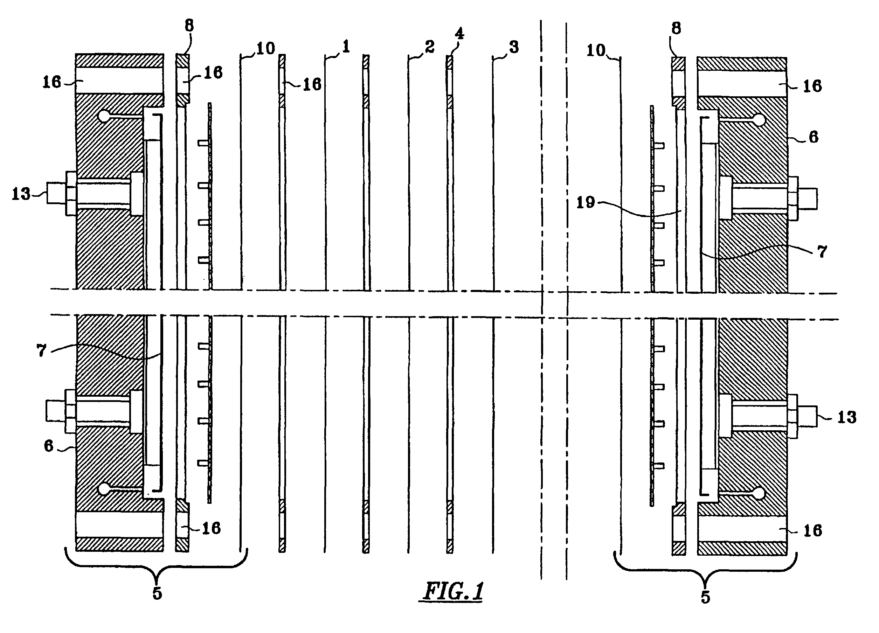

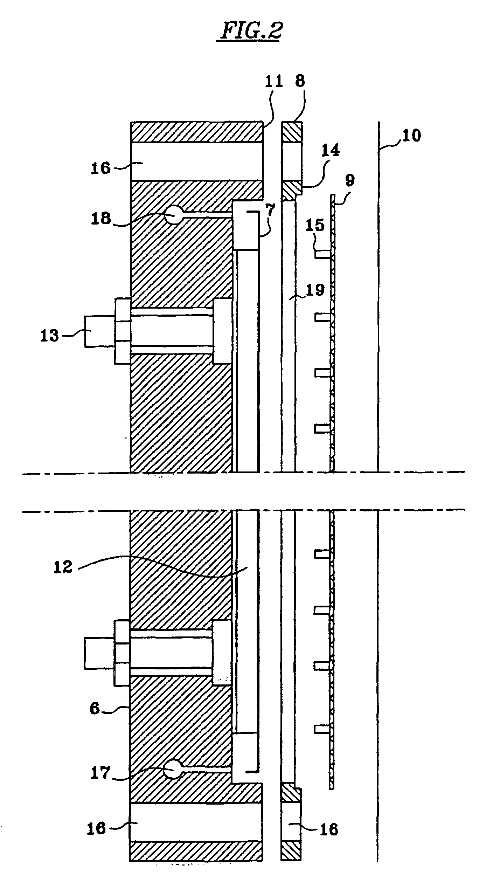

La figure 1 est une vue éclatée, en section longitudinale, verticale, d'une forme de réalisation particulière de l'électrodialyseur selon l'invention; La figure 2 est une vue analogue à la figure 1, d'un caisson d'extrémité de l'électrodialyseur de la figure 1.

Dans ces figures, des mêmes notations de référence désignent des éléments identiques.

L'électrodialyseur représenté à la figure 1 comprend, de manière connue en soi, des membranes sélectivement perméables aux ions 1, 2, 3, disposées verticalement et alternant avec des séparateurs verticaux 4, entre deux caissons d'extrémités. Chaque caisson d'extrémité est désigné dans son ensemble par la notation de référence 5. Les séparateurs 4 sont des cadres minces délimitant des compartiments d'électrodialyse 7 entre les membranes 1, 2 et 3.

La figure 2 montre à plus grande échelle un caisson d'extrémité 5. Conformément à l'invention, le caisson d'extrémité 5 comprend un plateau vertical rectangulaire 6, une électrode 7, un cadre 8, une plaque verticale 9 en métal déployé et une membrane 10 sélectivement perméable aux ions (par exemple une membrane sélectivement perméable aux cations). En regard du cadre 8, la plaque 6 présente un rebord périphérique en saillie 11. Le plateau 6 et son rebord 11 délimitent une cavité verticale dans laquelle est logée l'électrode 7. Celle-ci comprend une tôle métallique verticale, disposée sensiblement dans l'alignement de la face libre du rebord 11. La tôle 7 est soudée à des longerons métalliques verticaux 12, qui sont eux-mêmes soudés à des barreaux cylindriques horizontaux 13, traversant le plateau 6. Les barreaux 13 sont destinés à être raccordés à une source de courant continu, non représentée.

Le cadre vertical 8 est appliqué sur le rebord 11 du plateau 6 et porte la plaque en métal déployé 9. La plaque 9 est plus petite que le cadre 8 et elle se trouve en retrait d'un rebord périphérique en encorbellement 14. Des tenons cylindriques 15 dont la longueur est sensiblement égale à l'épaisseur du cadre 8, sont fixés à la plaque 9. Les tenons 15 sont en une matière non conductrice de l'électricité, par exemple en polytétrafluoroéthylène. Ils servent à maintenir la plaque 9 écartée de la tôle 7. Leur longueur est sensiblement égale à l'épaisseur du cadre 8, diminuée de l'épaisseur de la plaque 9. Elle est par exemple d'environ 10 mm. La membrane 10 est appliquée sur la plaque 9 et, à sa périphérie, sur le rebord 14 du cadre 8. Un couloir vertical 19 est ainsi ménagé dans le caisson 5, entre l'électrode 7 et la membrane 10.

Le plateau 6, le cadre 8, les cadres 4 et les membranes 10, 1, 2 et 3 sont percés d'ouvertures transversales 16 (non visibles sur les membranes), alignées en sorte de former des conduits pour la circulation des électrolytes pendant l'exploitation de l'électrodialyseur.

Dans le caisson d'extrémité 5, le plateau 6 et son rebord 11, le cadre 8 et la membrane 10 délimitent entre eux une chambre d'électrolyse contenant l'électrode 7. L'électrode 7 est une anode dans l'un des caissons 5 et une cathode dans l'autre caisson. Des conduits 17 et 18, ménagés dans le plateau 6, servent à l'admission d'un électrolyte dans la chambre d'électrolyse et à l'évacuation des produits de l'électrolyse.

Pendant l'exploitation de l'électrodialyseur des figures 1 et 2, on fait circuler des électrolytes dans les compartiments délimités entre les membranes 1, 2, 3, ... par l'intermédiaire des conduits 16. On relie les barreaux 13 des électrodes 7 aux bornes d'une source de courant continu et on introduit un électrolyte (par exemple une solution aqueuse d'hydroxyde de sodium) dans les deux caissons d'extrémités 5, via les conduits 17. L'électrolyte est décomposé au contact des électrodes 7, avec libération d'un gaz (généralement de l'oxygène à l'anode et de l'hydrogène à la cathode). Le gaz monte dans le couloir 19 en entraînant avec lui l'électrolyte décomposé et s'échappe avec lui par le conduit 18.

Dans une forme de réalisation spécialement avantageuse de l'électrodialyseur représenté aux figures, la membrane 1 est une membrane bipolaire, la membrane 2 est une membrane sélectivement perméable aux cations et la membrane 3 est une membrane sélectivement perméable aux anions. Cet ensemble de trois membranes constituent un motif ou cellule d'électrodialyse élémentaire et se répète en plusieurs exemplaires (par exemple une centaine d'exemplaires) entre les deux caissons 5. L'électrodialyseur selon cette forme de réalisation de l'invention trouve une application pour la fabrication d'une solution aqueuse d'hydroxyde de sodium au départ d'une solution aqueuse de chlorure de sodium.

## Revendications

1. Caisson d'extrémité pour un électrodialyseur, comprenant une électrode verticale (7) et une membrane (10) sélectivement perméable aux ions, disposée verticalement, vis-à-vis de l'électrode, **caractérisé en ce qu'**un couloir vertical (19) sépare l'électrode de la membrane.

2. Caisson selon la revendication 1, **caractérisé en ce que** l'électrode comprend une tôle verticale (7) et **en ce que** le couloir (19) est délimité entre ladite tôle (7) et une plaque verticale (9), ajourée, qui supporte la membrane (10) et qui est électriquement isolée de la tôle (7).

3. Caisson selon la revendications 1 ou 2, **caractérisé en ce que** le couloir (19) présente une largeur supérieure à 0,002 fois la hauteur de la tôle (7).

4. Caisson selon la revendication 3, **caractérisé en ce que** le rapport entre la largeur du couloir (19) et la hauteur de la tôle (7) est compris entre 1:200 et 1:50.

5. Caisson selon l'une quelconque des revendications 1 à 5, **caractérisé en ce que** la membrane (10) est sélectivement perméable aux cations.

6. Electrodialyseur comprenant une alternance de membranes verticales, sélectivement perméables aux ions et de séparateurs, entre deux caissons d'extrémités, **caractérisé en ce que** l'un au moins des caissons d'extrémités est conforme à l'une quelconque des revendications 1 à 5.

7. Electrodialyseur selon la revendication 6, **caractérisé en ce qu'**il comprend une membrane bipolaire.

8. Procédé d'électrodialyse, **caractérisé en ce qu'**on utilise un électrodialyseur conforme à la revendication 6 ou 7 et on met en oeuvre, dans l'électrodialyseur, une densité de courant inférieure à 3 kA/m².

9. Procédé selon la revendication 8, **caractérisé en ce que** la densité de courant est de 0,1 à 2,0 kA/m².

10. Procédé selon la revendication 8 ou 9, **caractérisé en ce qu'**il est appliqué à l'électrodialyse d'une solution aqueuse de chlorure de sodium.

## Patentansprüche

1. Endkasten für einen Elektrodialysator mit einer vertikalen Elektrode (7) und einer für Ionen selektiv permeablen Membrane (10), die gegenüber der Elektrode vertikal angeordnet ist, **dadurch gekennzeichnet, daß** ein vertikaler Durchgang (19) die Elektrode von der Membrane trennt.

2. Kasten nach Anspruch 1, **dadurch gekennzeichnet, daß** die Elektrode ein vertikales Blech (7) aufweist und daß der Durchsatz (19) zwischen diesem Blech (7) und einer vertikalen Lochplatte (9) gebildet ist, welche die Membrane (10) trägt und vom Blech (7) elektrisch isoliert ist.

3. Kasten nach Anspruch 1 oder 2, **dadurch gekennzeichnet, daß** der Durchgang (19) eine Breite größer als das 0,002-fache der Höhe des Bleches (7) aufweist.

4. Kasten nach Anspruch 3, **dadurch gekennzeichnet, daß** das Verhältnis zwischen der Breite des Durchganges (19) und der Höhe des Bleches (7) zwischen 1:200 und 1:50 beträgt.

5. Kasten nach einem der Ansprüche 1 bis 5, **dadurch gekennzeichnet, daß** die Membrane (10) für Kationen selektiv permeabel ist.

6. Elektrodialysator mit einer anwechselnden Anordnung von für Ionen selektiv permeablen vertikalen Membranen und von Separatoren, die zwischen zwei Endkästen angeordnet ist, **dadurch gekennzeichnet, daß** zumindest einer der Endkästen gemäß einem der Ansprüche 1 bis 5 ausgebildet ist.

7. Elektrodialysator nach Anspruch 6, **dadurch gekennzeichnet, daß** er eine bipolare Membrane aufweist.

8. Verfahren zur Elektrodialyse, **dadurch gekennzeichnet, daß** man einen Elektrodialysator gemäß Anspruch 6 oder 7 anwendet und den Elektrodialysator mit einer Stromdichte von weniger als 3 kA/m² betreibt.

9. Verfahren nach Anspruch 8, **dadurch gekennzeichnet, daß** die Stromdichte zwischen 0,1 und 2,0 kA/m² beträgt.

10. Verfahren nach Anspruch 8 oder 9, **dadurch gekennzeichnet, daß** es zur Elektrodialyse einer wäßrigen Natriumchloridlösung angewendet wird.

## Claims

1. Endbox for an electrodialysis device comprising a vertical electrode (7) and a selectively ion-permeable membrane (10) which is arranged vertically, facing the electrode, which endbox is **characterized in that** a vertical passage (19) separates the electrode from the membrane.

2. Box according to Claim 1, **characterized in that** the electrode comprises a vertical sheet (7) and **in that** the passage (19) is delimited between the said sheet (7) and a permeated vertical plate (9) which supports the membrane (10) and which is electrically insulated from the sheet (7).

3. Box according to Claim 1 or 2, **characterized in that** the passage (19) has a width exceeding 0.002 times the height of the sheet (7).

4. Box according to Claim 3, **characterized in that** the ratio between the width of the passage (19) and the height of the sheet (7) is between 1:200 and 1:50.

5. Box according to any one of Claims 1 to 5, **characterized in that** the membrane (10) is selectively permeable to cations.

6. Electrodialysis device comprising an alternation of vertical selectively ion-permeable membranes and of dividers, between two endboxes, **characterized in that** at least one of the endboxes is in accordance with any one of Claims 1 to 5.

7. Electrodialysis device according to Claim 6, **characterized in that** it comprises a bipolar membrane.

8. Electrodialysis method, **characterized in that** use is made of an electrodialysis device according to Claim 6 or 7 and **in that**, within the electrodialysis device, the current used has a density of less than 3 kA/m².

9. Method according to Claim 8, **characterized in that** the current density is from 0.1 to 2.0 kA/m².

10. Method according to Claim 8 or 9, **characterized in that** it is applied to the electrodialysis of an aqueous solution of sodium chloride.
